# EUROPEAN PATENT SPECIFICATION

(11) **EP 3 763 474 B1**
(45) Date of publication and mention of the grant of the patent: **11.11.2026**
(21) Application number: 19764135.0
(22) Date of filing: 26.02.2019
(51) Int. Cl.: B23K 26/323, B23K 26/21, B23K 26/211, B23K 26/22, B23K 9/04, B23K 26/342, B23K 103/18

(54) **JOINING STRUCTURE AND JOINING METHOD**
VERBINDUNGSSTRUKTUR UND VERBINDUNGSVERFAHREN
STRUCTURE DE JONCTION ET PROCÉDÉ DE JONCTION

(30) Priority: 05.03.2018 JP 2018038907
(43) Date of publication of application: 13.01.2021
(73) Proprietor: Panasonic Intellectual Property Management Co., Ltd., Osaka-shi, Osaka 540-6207 (JP)
(72) Inventor: FUJIWARA, Junji, Osaka-shi Osaka 540-6207 (JP)
(74) Representative: Vigand, Philippe
(86) International application number: PCT/JP2019/007395
(87) International publication number: WO 2019/172025

(56) References cited:
- WO-A1-2017/169998
- WO-A1-2017/169998
- WO-A1-2017/170517
- WO-A1-2017/170518
- WO-A1-2018/030272
- WO-A1-2018/042680
- JP-A- 2016 068 096
- JP-A- 2016 155 153
- JP-A- 2016 155 153
- US-A1- 2014 294 489

## Description

### TECHNICAL FIELD

The present disclosure relates to a joining structure and a joining method.

### BACKGROUND ART

Conventionally, joining structures in which a first material and a second material that are formed of metal materials of the same type which can be welded to each other are welded in a state in which a third material that is difficult to weld to the first material and the second material is interposed between the first material and the second material, and thus, the third material as a material of a different type is compressed and fixed have been known (see, for example, Patent Document 1). WO 2017/169998 A1 discloses the preamble of claim 1 and discloses a joining method using a spacer.

### CITATION LIST

### PATENT DOCUMENT

PATENT DOCUMENT 1: International Patent Publication No. WO2017/170517

### SUMMARY OF THE INVENTION

### TECHNICAL PROBLEM

Incidentally, in the invention of Patent Document 1, a protrusion extruded in a tapered shape to have an embossed shape is formed in each of a first material and a second material, the protrusions are arranged so as to face each other to reduce a gap therebetween, and then, laser welding is performed.

In general, the protrusions are formed by drawing by performing press work. When the first and second materials are pressed, depending on a clearance between a punch serving as a projecting mold and a die serving as a recessed mold that are used in drawing, for example, in a case in which the clearance is too narrow, or the like, the first and second material are partially drawn too much, so that a portion that is much thinner than a plate thickness is formed, and as a result, joining strength is reduced in some cases.

In view of the foregoing, the present disclosure has been devised, and it is therefore an object of the present disclosure to enable joining of metal materials of the same type and a material of a different type without reducing thicknesses of the metal materials.

### SOLUTION TO THE PROBLEM

Aspects of the present invention are directed to a joining structure including a first member formed of a metal material, a second member formed of a metal material of a same type as that of the first member which can be welded to the first member, and a third member formed of a material that is difficult to weld to the first member and the second member, the first member, the second member, and the third member being jointed to each other, and the following solutions have been devised.

That is, a first aspect is provided in claim 1.

In the first aspect, the first member and the second member are formed of metal materials of the same type and the third material is formed of a material of a different type that is difficult to weld to the first member and the second member. The first member and the second member are welded to each other such that respective regions of the first member and the second member which correspond to the spacer are welded via the through portion with the third member interposed therebetween. The spacer is formed of the filler material that is joined to the second member such that a central portion protrudes toward the first member more than the outer peripheral portion.

Thus, the first member, the second member, and the third member can be joined with each other in a state in which the third member that is a material of a different type is interposed between the first member and the second member without reducing thicknesses of the first member and the second member that are metal materials of the same type.

Specifically, in a case in which welding is performed in a state in which the third member is interposed between the first member and the second member, the first member and the second member are disposed so as to be separated from each other by a distance corresponding to a thickness of the third member, and therefore, a gap is too large, so that laser welding cannot be performed.

For this reason, conventionally, each of the first member and the second member is pressed to form a protrusion having an embossed shape, the respective protrusions are arranged to face each other to reduce the gap, and then, laser welding is performed.

However, there is a probability that, when the first member and the second member are pressed, the first member and the second member are partially drawn and a portion that is much thinner than a plate thickness is formed, so that joining strength is reduced.

Therefore, in this aspect, the spacer formed of the filler material is provided, for example, by performing arc welding using a consumable electrode or a filler wire or laser filler welding using a filler wire on the second member such that the height of the central portion of the spacer is larger than the plate thickness of the third member.

Thus, the gap between the first member and the second member is reduced by an amount corresponding to the height of the spacer without reducing the thickness of the second member, and the first member and the second member can be joined by laser welding.

The central portion of the spacer protrudes more than the outer peripheral portion, and therefore, in a state in which the spacer is inserted into the through portion, a gap is provided in a periphery of the spacer, that is, between the spacer and an inner peripheral wall of the through portion. Moreover, deformation of the first member when the first member and the second member are laser-welded and a molten metal is solidified and shrunk is allowed by the gap in the periphery of the spacer.

Thus, the third member interposed between the first member and the second member can be compressed and fixed.

A second aspect is characterized in that, in the joining structure of the first aspect, the first member is welded to at least the spacer in a state in which the region of the first member which corresponds to the spacer is warped toward the spacer.

In the second aspect, the first member and the second member are joined in a state in which the region of the first member which corresponds to the spacer is warped. That is, when the first member and the second member are laser-welded, the molten metal is solidified and shrunk and the first member is warped, and thus, a gap between the first member and the spacer is reduced, so that the third member interposed therebetween can be compressed and fixed.

A third aspect is provided in claim 3 and is directed to a joining method, in which a first member formed of a metal material, a second member formed of a metal material of a same type as that of the first member which can be welded to the first member, and a third member formed of a material that is difficult to weld to the first member and the second member are joined to each other, and a through portion is formed in the third member, and the joining method includes steps of providing a spacer formed such that a central portion protrudes more than an outer peripheral portion by melting a filler material to join the filler material to the second member, interposing the third member between the first member and the second member in a state where the spacer is inserted into the through portion of the third member, and welding the first member to at least the spacer by radiating laser light to a region of the first member which corresponds to the spacer.

In the third aspect, the first member and the second member are formed of metal materials of the same type and the third material is formed of a material of a different type that is difficult to weld to the first member and the second member. The spacer formed such that the central portion protrudes more than the outer peripheral portion is provided by melting the filler material to join the filler material to the second member, and the first member is laser-welded to at least the spacer in a state in which the third member is interposed between the first member and the second member.

Thus, the first member, the second member, and the third member can be joined with each other in a state in which the third member that is a material of a different type is interposed between the first member and the second member without reducing thicknesses of the first member and the second member that are metal materials of the same type.

In the third aspect, in the step of providing the spacer, the filler material is melted such that a height of the central portion of the spacer is larger than a thickness of the third member, and the step of interposing the third member between the first member and the second member is performed before the filler material is solidified.

The filler material is melted such that the height of the central portion of the spacer is larger than the thickness of the third member and, before the filler material is solidified, the third member is interposed between the first member and the second member.

Thus, even in a case in which the height of the central portion of the spacer exceeds the thickness of the third member, the central portion of the spacer can be deformed so as to fit in the through portion by pressing the first member against the spacer before the filler is solidified. Thereafter, the first member and the second member can be joined to each other with the third member interposed between the first member and the second member by laser-welding the first member and the second member.

A fourth aspect is characterized in that, in the joining method of the third aspect, in the step of welding the first member to at least the spacer, when temperature of the spacer is equal to or lower than a melting point and equal to or higher than 100 °C, laser light is radiated.

In the fourth aspect, when the temperature of the spacer is equal to or lower than the melting point and equal to or higher than 100 °C, that is, the spacer is at a red heat, laser welding is performed, so that excellent shrinkability of the molten metal when the molten metal is solidified is achieved.

A fifth aspect is characterized in that the joining method of the third aspect further includes a step of preparing a molding jig provided with a molding hole passing through the molding jig in a thickness direction and having a hole diameter that gradually increases from one surface to another surface and formed of a material a melting point of which is higher than that of the filler material, and in the step of providing the spacer, in a state in which a surface of the molding jig at which the hole diameter of the molding hole is larger is placed on the second member, the filler material is melted in the molding hole, and thereafter, the molding jig is removed.

In the fifth aspect, in a state in which the molding jig formed of a material a melting point of which is higher than that of the filler material is placed to overlap the second member, the filler material is melted in the molding hold. For example, in a case in which the third member is formed of an aluminum material or a resin material that is deformed or melted when the aluminum material or the resin material touches a high temperature filler material, or in like case, the spacer may be formed in advance using the molding jig.

Moreover, a surface of the molding jig at which the hole diameter of the molding hole is larger is placed on the second member, and thus, after the filler material is solidified, the molding jig can be easily removed.

### ADVANTAGES OF THE INVENTION

According to the aspects of the present invention, metal materials of the same type and a material of a different type can be joined to each other without reducing thicknesses of the metal materials.

### BRIEF DESCRIPTION OF THE DRAWINGS

[FIG. 1] FIG. 1 is a side cross-sectional view illustrating a joining structure according to a first embodiment not covered by the present invention.
[FIG. 2] FIG. 2 is a side cross-sectional view illustrating a state in which a spacer is provided in a second member by arc welding.
[FIG. 3] FIG. 3 is a side cross-sectional view illustrating the joining structure before laser welding.
[FIG. 4] FIG. 4 is a side cross-sectional view illustrating a state in which a spacer is provided in a second member by arc welding in a joining structure according to a second embodiment not covered by the present invention.
[FIG. 5] FIG. 5 is a side cross-sectional view illustrating the joining structure before laser welding.
[FIG. 6] FIG. 6 is a side cross-sectional view illustrating the joining structure after welding.
[FIG. 7] FIG. 7 is a side cross-sectional view illustrating a state in which a spacer is provided in a second member by arc welding in a joining structure according to a third embodiment according to the present invention.
[FIG. 8] FIG. 8 is a side cross-sectional view illustrating the joining structure before laser welding.
[FIG. 9] FIG. 9 is a side cross-sectional view illustrating the joining structure after welding.
[FIG. 10] FIG. 10 is a side cross-sectional view illustrating a state in which a spacer is provided in a second member by arc welding in a joining structure according to a fourth embodiment not covered by the present invention.
[FIG. 11] FIG. 11 is a side cross-sectional view illustrating the joining structure before laser welding.
[FIG. 12] FIG. 12 is a side cross-sectional view illustrating the joining structure after welding.
[FIG. 13] FIG. 13 is a side cross-sectional view illustrating a joining structure according to another embodiment.

### DESCRIPTION OF EMBODIMENTS

Embodiments of the present disclosure will be described below with reference to the accompanying drawings. Note that the following description of preferred embodiments describes mere examples by nature and is not intended to limit the scope, application, or use of the present invention as defined by the appended claims.

### First Embodiment (not covered by the present invention)

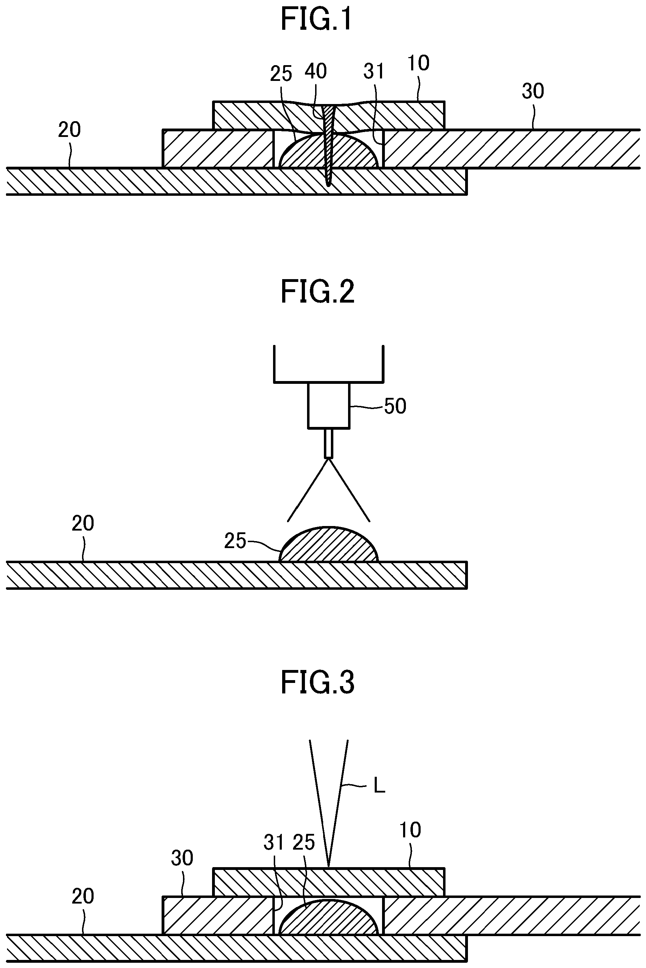

As illustrated in FIG. 1, in a joining structure according to this embodiment, a first member 10, a second member 20, and a third member 30 are joined to each other with the third member 30 interposed between the first member 10 and the second member 20.

The first member 10 is a plate-like-member formed of a metal material. The second member 20 is a plate-like member formed of a metal material of the same type as that of the first member 10 which can be welded to the first member 10. In the second member 20, a spacer 25 is provided on a surface that faces the first member 10.

The spacer 25 is formed of a filler material that is joined to the second member 20. The spacer 25 is formed in a curved shape in which a central portion protrudes toward the first member 10 more than an outer peripheral portion.

The third member 30 is a plate-like member formed of a material that is difficult to weld to the first member 10 and the second member 20, and a through hole 31 as a through portion is formed therein. Note that, although the through hole 31 is provided as the through portion, the through portion may be a through groove.

In this case, the spacer 25 is inserted in the through hole 31 of the third member 30. Because the spacer 25 is inserted in the through hole 31 of the third member 30 in the above described manner, the through hole 31 has an effect of restraining relative positional displacement of the second member 20 with respect to the second member 20.

In preforming joining, the third member 30 that is a material of a different type is disposed so as to be interposed between the first member 10 and the second member 20 that are metal materials of the same type.

As used herein, the "metal materials of the same type" mean metals that can be welded to each other and may be not only the same material but also metal materials, such as ferrous metal materials, nonferrous metal materials, or the like, which have a good weld joining property. In other words, the "metal materials of the same type" mean materials of the same type which have good compatibility in welding.

Specifically, combinations of the first member 10 and the second member 20 in performing welding are as follows. For example, as combinations of ferrous metal materials, there are combinations of soft steel and soft steel, stainless and stainless, soft steel and high tensile steel, high tensile steel and high tensile steel, and the like. As combinations of nonferrous metal materials, there are combinations of aluminum and aluminum, aluminum and aluminum alloy, aluminum alloy and aluminum alloy, and the like.

The third member 30 as a material of a different type is a different material from those of the first member 10 and the second member 20 as metal materials of the same type and is a material that is difficult to weld to the first member 10 and the second member 20.

For example, in a case in which the first member 10 and the second member 20 as metal materials of the same type are ferrous metal materials, the third member 30 as a material of a different type is a nonferrous metal material, such as a copper material, an aluminum material, or the like, which has a low laser light absorptivity and is difficult to laser weld. For example, examples of a material of a different type from the metal materials include a resin material, such as carbon fiber reinforced plastics (CFRP), polyethylene terephthalate (PET), or the like.

Note that, in the following description, a case in which a soft steel material is used as the first member 10 and the second member 20, an aluminum material is used as the third member 30, and a soft steel material is used as a filler material will be described.

The first member 10 and the second member 20 are joined by laser welding. Specifically, laser welding is performed by radiating laser light L toward a region of the first member 10 which corresponds to the spacer 25 from an upper side in a plate thickness direction.

When laser welding is performed by radiating the laser light L to the first member 10, a welded portion 40 is formed during welding. At this time, a molten metal of the welded portion 40 of the first member 10 and the second member 20 is solidified and shrunk, and therefore, the region of the first member 10 which corresponds to the spacer 25 is warped toward the spacer 25 and a gap between the first member 10 and the spacer 25 is reduced.

Thus, the first member 10 and the second member 20 as metal materials of the same type are melted and joined via the spacer 25 and then solidified and shrunk, and the third member 30 as a material of a different type interposed therebetween is compressed and fixed.

A joining method for joining the first member 10, the second member 20, and the third member 30 will be described below. As illustrated in FIG. 2, first, arc welding (CO₂, MAG, TIG) is performed on the second member 20 using an arc welding machine 50, and thus, the spacer 25 formed of a filler material is provided on a surface of the second member 20. The spacer 25 is formed in a curved shape protruding upward by a surface tension acting during welding. Therefore, the central portion of the spacer 25 is higher than the outer peripheral portion thereof.

Note that, in performing arc welding, a feeding amount of the filler material needs to be adjusted such that an outer diameter of a lower peripheral edge portion of the spacer 25 is smaller than a hole diameter of the through hole 31 of the third member 30 and a height of the central portion of the spacer 25 is smaller than a plate thickness of the third member 30.

Next, as illustrated in FIG. 3, with the spacer 25 inserted in the through hole 31 of the third member 30, the third member 30 is interposed between the first member 10 and the second member 20. In this case, the height of the central portion of the spacer 25 is smaller than the plate thickness of the third member 30, and therefore, a gap is provided between the first member 10 and the spacer 25.

Then, the laser light L is radiated to the region of the first member 10 which corresponds to the spacer 25, and thus, the welded portion 40 that is continuous to the first member 10, the spacer 25, and the second member 20 is formed. Thus, the first member 10 and the second member 20 are joined via the spacer 25.

At this time, as illustrated in FIG. 1, the molten metal of the welded portion 40 is solidified and shrunk, so that the first member 10 is warped, and thus, the gap between the first member 10 and the spacer 25 is reduced. Therefore, the third member 30 as a material of a different type can be compressed and fixed between the first member 10 and the second member 20 that are metal materials of the same type.

### Second Embodiment (not covered by the present invention)

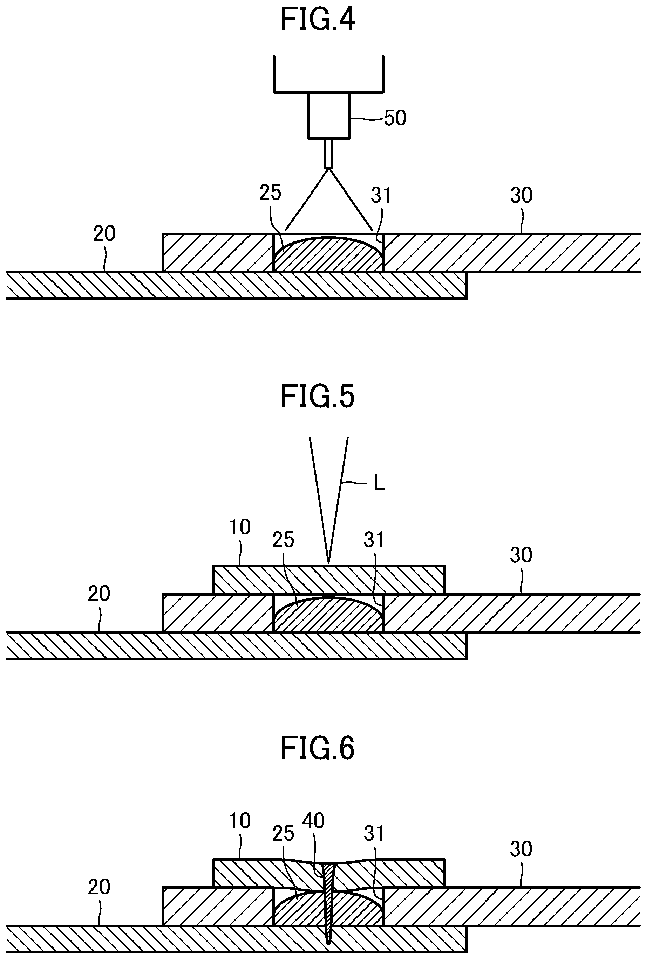

A joining structure according to a second embodiment will be described with reference to FIG. 4 to FIG. 6. Note that the same components as those in the first embodiment will be denoted by the same reference symbols as those in the first embodiment and only different points will be described below.

As illustrated in FIG. 4, first, the third member 30 is placed to overlap the second member 20. Then, a filler material is melted in the through hole 31 of the third member 30 using the arc welding machine 50, and thus, the spacer 25 formed of the filler material is provided on a surface of the second member 20. At this time, the melted filler material can be regulated by an inner peripheral wall of the through hole 31 of the third member 30 so as not to spread on the surface of the second member 20, and therefore, the spacer 25 can be easily formed to have a desired height.

The spacer 25 is formed in a curved shape protruding upward by a surface tension acting during welding. Therefore, the height of the central portion of the spacer 25 is larger than that of the outer peripheral portion.

Note that, in performing arc welding, the feeding amount of the filler material needs to be adjusted such that the height of the central portion of the spacer 25 is smaller than the plate thickness of the third member 30.

Next, as illustrated in FIG. 5, the first member 10 is placed to overlap an upper surface of the third member 30 and, with the spacer 25 inserted in the through hole 31 of the third member 30, the third member 30 is interposed between the first member 10 and the second member 20. In this case, the height of the central portion of the spacer 25 is smaller than the plate thickness of the third member 30, and therefore, a gap is provided between the first member 10 and the spacer 25.

Then, the laser light L is radiated to the region of the first member 10 which corresponds to the spacer 25, and thus, the welded portion 40 that is continuous to the first member 10, the spacer 25, and the second member 20 is formed. Thus, the first member 10 and the second member 20 are joined via the spacer 25.

At this time, as illustrated in FIG. 6, the molten metal of the welded portion 40 is solidified and shrunk, so that the first member 10 is warped, and thus, the gap between the first member 10 and the spacer 25 is reduced. Therefore, the third member 30 as a material of a different type can be compressed and fixed between the first member 10 and the second member 20 that are metal materials of the same type.

### Third Embodiment

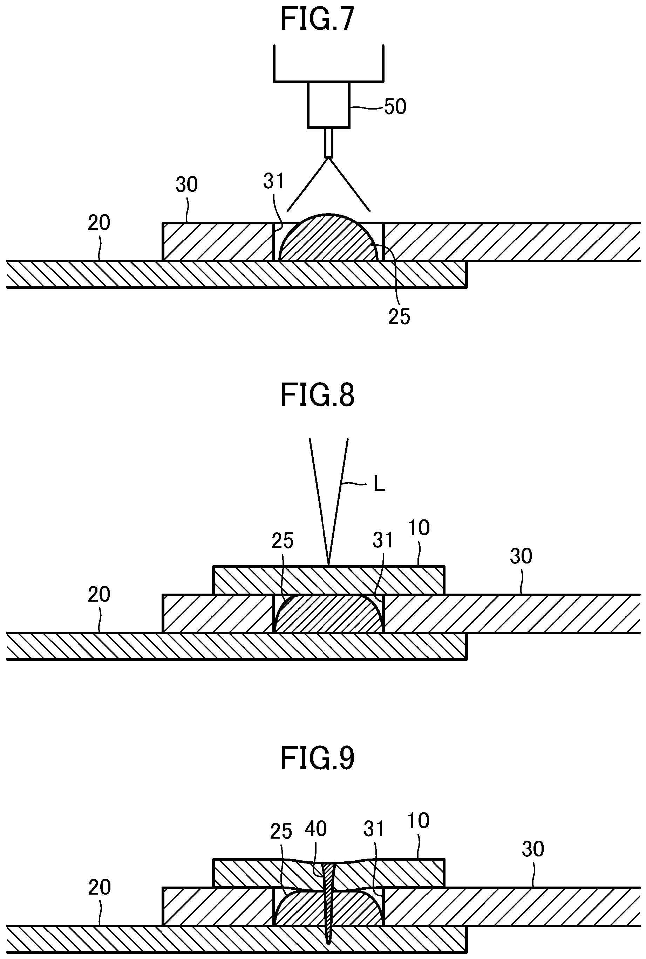

A joining structure according to a third embodiment will be described with reference to FIG. 7 to FIG. 9. Note that the same components as those in the first embodiment will be denoted by the same reference symbols as those in the first embodiment and only different points will be described below.

As illustrated in FIG. 7, first, the third member 30 is placed to overlap the second member 20. Then, a filler material is melted in the through hole 31 of the third member 30 using the arc welding machine 50, and thus, the spacer 25 formed of the filler material is provided on a surface of the second member 20.

The spacer 25 is formed in a curved shape protruding upward by a surface tension acting during welding. Therefore, the central portion of the spacer 25 is higher than the outer peripheral portion.

In this case, in performing arc welding, the feeding amount of the filler material is adjusted such that the height of the central portion of the spacer 25 is larger than the plate thickness of the third member 30. For example, the central portion of the spacer 25 is higher than a level at which a plate surface of the third member 30 is located by about 0.1 to 1 mm.

Next, as illustrated in FIG. 8, before the melted filler material is solidified (for example, a solidification time is two to three seconds), the first member 10 is placed on the upper surface of the third member 30 and the first member 10 is pressed against the spacer 25. Thus, the central portion of the spacer 25 is deformed so that the spacer 25 fits in the through hole 31 of the third member 30.

Then, the laser light L is radiated to the region of the first member 10 which corresponds to the spacer 25, and thus, the welded portion 40 that is continuous to the first member 10, the spacer 25, and the second member 20 is formed. Thus, the first member 10 and the second member 20 are joined via the spacer 25.

In this case, the laser light L is radiated when temperature of the spacer 25 is equal to or lower than a melting point and equal to or lower than 100 °C, that is, when the spacer 25 is at a red heat. Thus, as illustrated in FIG. 9, excellent shrinkability of the molten metal when the molten metal is solidified is achieved, and the molten metal of the welded portion 40 is solidified and shrunk, and the first member 10 is warped, so that the third member 30 that is a material of a different type can be compressed and fixed between the first member 10 and the second member 20 that are metal materials of the same type.

### Fourth Embodiment (not covered by the present invention)

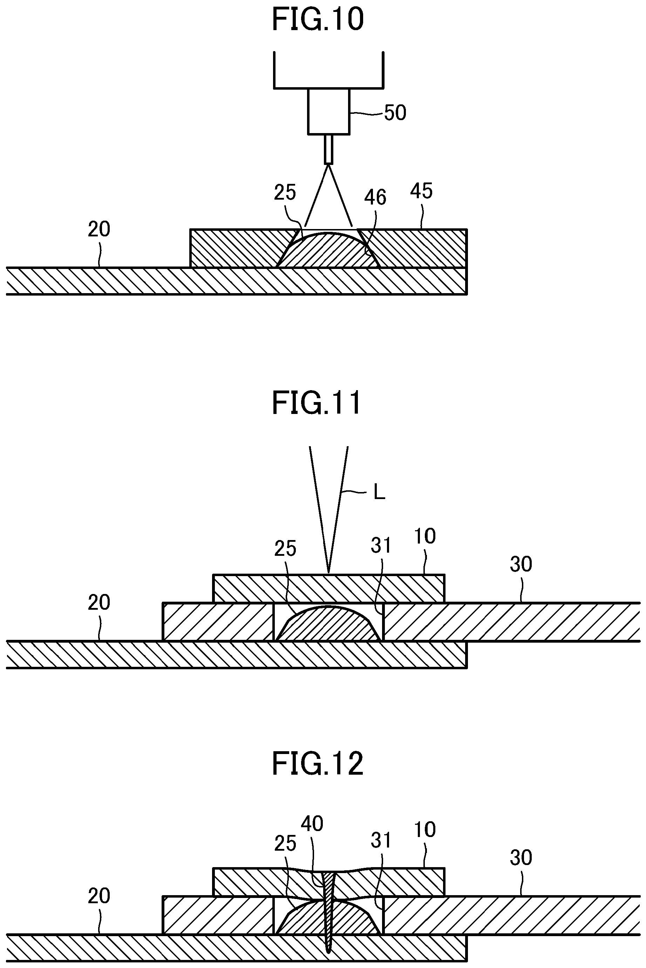

A joining structure according to a fourth embodiment will be described with reference to FIG. 10 to FIG. 12. Note that the same components as those in the first embodiment will be denoted by the same reference symbols as those in the first embodiment and only different points will be described below.

As illustrated in FIG. 10, a molding jig 45 used for forming the spacer 25 is prepared. The molding jig 45 is a plate-like member formed of a material a melting point of which is higher than that of the filler material. For example, in a case in which a soft steel material a melting point of which is about 1600 °C is used as the filler material, the molding jig 45 may be formed of tungsten, molybdenum, or the like, a melting point of which is 3000 °C or more.

Thus, for example, even in a case in which the third member 30 is formed of an aluminum material (a melting point of which is about 660 °C) that is deformed or melted when the aluminum material touches a high temperature filler material, the spacer 25 can be formed in advance using the molding jig 45.

In the molding jig 45, a molding hole 46 that passes through the molding jig 45 in a thickness direction is provided. The molding hole 46 is formed in a tapered shape in which a hole diameter gradually increases from an upper surface of the molding jig 45 to a lower surface thereof. In this case, the hole diameter of the molding hole 46 at a lower surface is smaller than a hole diameter of the through hole 31 of the third member 30 (for example, by about 0.5 mm).

Note that the shape of the molding hole 46 is not limited to the tapered shape but may be a shape with which the molding jig 45 can be easily removed after the filler material is solidified. For example, the molding hole 46 may be formed such that a cross section of the molding hole 46 is circular arc-shaped.

Then, in a state in which a surface of the molding jig 45 at which the hole diameter of the molding hole 46 is larger is placed on the second member 20, using the arc welding machine 50, the filler material is melted in the molding hole 46 of the molding jig 45 and the spacer 25 formed of the filler material is provided on a surface of the second member 20. In this case, the molding hole 46 is formed in a tapered shape, and therefore, the molding jig 45 can be easily removed after the filler material is solidified.

The outer peripheral portion of the spacer 25 is formed in a tapered shape so as to correspond to the tapered shape of the molding hole 46. The central portion of the spacer 25 is formed in a curved shape protruding upward by a surface tension acting during welding. Therefore, the central portion of the spacer 25 is higher than the outer peripheral portion thereof.

Note that, in performing arc welding, the feeding amount of the filler material needs to be adjusted such that the height of the central portion of the spacer 25 is smaller than the plate thickness of the third member 30.

Next, as illustrated in FIG. 11, the first member 10 is placed on the upper surface of the third member 30 and, with the spacer 25 inserted in the through hole 31 of the third member 30, the third member 30 is interposed between the first member 10 and the second member 20. In this case, the height of the central portion of the spacer 25 is smaller than the plate thickness of the third member 30, and therefore, a gap is provided between the first member 10 and the spacer 25.

Then, the laser light L is radiated to the region of the first member 10 which corresponds to the spacer 25, and thus, the welded portion 40 that is continuous to the first member 10, the spacer 25, and the second member 20 is formed. Thus, the first member 10 and the second member 20 are joined via the spacer 25.

At this time, as illustrated in FIG. 12, the molten metal of the welded portion 40 is solidified and shrunk, so that the first member 10 is warped, and thus, the gap between the first member 10 and the spacer 25 is reduced. Therefore, the third member 30 as a material of a different type can be compressed and fixed between the first member 10 and the second member 20 that are metal materials of the same type.

### Other Embodiments

Each of the above described embodiments may have a following configuration.

In the above described embodiments, laser welding is performed, and thus, the welded portion 40 that is continuous to the first member 10, the spacer 25, and the second member 20 is formed. However, the present disclosure is not limited thereto.

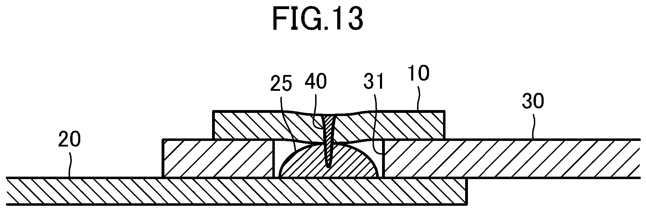

For example, as illustrated in FIG. 13, the welded portion 40 that is continuous to the first member 10 and the spacer 25 may be formed by radiating the laser light L from a side in which an upper surface of the first member 10 is located. By joining the first member 10 to at least the spacer 25 in the above described manner, the first member 10, the second member 20, and the third member 30 can be joined to each other.

In the above described embodiments, the spacer 25 is provided only in the second member 20, but the spacer 25 may be provided also in the first member 10.

In the above described embodiments, arc welding is performed on the second member 20, and thus, the spacer 25 formed of the filler material is provided. However, the spacer 25 may be provided, for example, by performing laser filler welding.

### INDUSTRIAL APPLICABILITY

As described above, according to the present disclosure, a highly practical effect that metal materials of the same type and a material of a different type can be joined without reducing thicknesses of the metal materials can be achieved, and therefore, the present disclosure is very useful and has high industrial applicability.

### DESCRIPTION OF REFERENCE CHARACTERS

- 10: First member
- 20: Second member
- 25: Spacer
- 30: Third member
- 31: Through hole (through portion)
- 45: Molding jig
- 46: Molding hole
- L: Laser light L

## Claims

1. A joining structure, comprising:
a first member (10) formed of a metal material;
a second member (20) formed of a metal material of a same type as that of the first member (10) which can be welded to the first member (10); and
a third member (30) formed of a material that is difficult to weld to the first member (10) and the second member (20),
the first member (10), the second member (20), and the third member (30) being jointed to each other,
wherein
the second member (20) is provided with a spacer (25) formed of a filler material that is joined to a surface of the second member (20) which faces the first member (10) ,
a through portion (31) in which the spacer (25) is inserted is formed in the third member (30), and
the first member (10) is welded to at least the spacer (25) by a welded portion (40), in a state where the spacer (25) is inserted into the through portion (31) and the third member (30) is interposed between the first member (10) and the second member (20),
**characterized in that** the spacer (25) is formed such that a central portion of the spacer (25) protrudes toward the first member (10) more than an outer peripheral portion of the spacer (25) and such that the height of the central portion of the spacer (25) is larger than the plate thickness of the third member 30, and the first member (10) is placed on a surface of the third member (30) and pressed against the spacer (25) before the melted filler material is solidified such that the central portion of the spacer (25) is deformed so that the spacer (25) fits in the through hole (31) of the third member (30).

2. The joining structure of claim 1, wherein
the first member (10) is welded to at least the spacer (25) in a state in which a region of the first member (10) which corresponds to the spacer (25) is warped toward the spacer (25).

3. A joining method, wherein
a first member (10) formed of a metal material, a second member (20) formed of a metal material of a same type as that of the first member (10) which can be welded to the first member (10), and a third member (30) formed of a material that is difficult to weld to the first member (10) and the second member (20) are joined to each other, and
a through portion (31) is formed in the third member (30),
the joining method comprising steps of:
providing a spacer (25) formed such that a central portion of the spacer (25) protrudes more than an outer peripheral portion of the spacer (25) and that a height of the central portion of the spacer (25) is larger than a thickness of the third member (30), by melting a filler material in the through portion (31) to join the filler material to the second member (20) in a state where the third member (30) is placed on the second member (20);
interposing the third member (30) between the first member (10) and the second member (20) by placing the first member (10) on a surface of the third member (30) and pressing the first member (10) against the spacer (25) before the filler material is solidified, and
welding the first member (10) to at least the spacer (25) by radiating laser light (L) to a region of the first member (10) which corresponds to the spacer (25).

4. The joining method of claim 3, wherein
in the step of welding the first member (10) to at least the spacer (25), when temperature of the spacer (25) is equal to or lower than a melting point and equal to or higher than 100 °C, laser light (L) is radiated.

5. The joining method of claim 3 or 4, further comprising a step of:
preparing a molding jig (45) provided with a molding hole (46) passing through the molding jig (45) in a thickness direction and having a hole diameter that gradually increases from one surface to another surface and formed of a material a melting point of which is higher than that of the filler material,
wherein
in the step of providing the spacer (25), in a state in which a surface of the molding jig (45) at which the hole diameter of the molding hole (46) is larger is placed on the second member (20), the filler material is melted in the molding hole (46), and thereafter, the molding jig (45) is removed.

## Patentansprüche

1. Fügestruktur, umfassend:
ein erstes Element (10), das aus einem metallischen Material gebildet ist;
ein zweites Element (20), das aus einem metallischen Material desselben Typs wie das des ersten Elements (10) gebildet ist, das mit dem ersten Element (10) verschweißt werden kann; und
ein drittes Element (30), das aus einem Material gebildet ist, das schwer mit dem ersten Element (10) und dem zweiten Element (20) zu verschweißen ist,
wobei das erste Element (10), das zweite Element (20) und das dritte Element (30) miteinander verbunden sind,
wobei
das zweite Element (20) mit einem Abstandshalter (25) versehen ist, der aus einem Zusatzmaterial gebildet ist, das mit einer Oberfläche des zweiten Elements (20), die dem ersten Element (10) zugewandt ist, verbunden ist,
ein Durchgangsabschnitt (31), in den der Abstandshalter (25) eingesetzt ist, in dem dritten Element (30) gebildet ist,
und
das erste Element (10) durch einen Schweißabschnitt (40) zumindest mit dem Abstandshalter (25) verschweißt ist, in einem Zustand, in dem der Abstandshalter (25) in den Durchgangsabschnitt (31) eingesetzt ist und das dritte Element (30) zwischen dem ersten Element (10) und dem zweiten Element (20) angeordnet ist,
**dadurch gekennzeichnet, dass** der Abstandshalter (25) derart gebildet ist, dass ein zentraler Abschnitt des Abstandshalters (25) mehr in Richtung des ersten Elements (10) vorsteht als ein äußerer Umfangsabschnitt des Abstandshalters (25) und derart, dass die Höhe des zentralen Abschnitts des Abstandshalters (25) größer ist als die Plattendicke des dritten Elements (30), und das erste Element (10) auf einer Oberfläche des dritten Elements (30) angeordnet und gegen den Abstandshalter (25) gedrückt wird, bevor das geschmolzene Zusatzmaterial erstarrt ist, so dass der zentrale Abschnitt des Abstandshalters (25) verformt wird, so dass der Abstandshalter (25) in das Durchgangsloch (31) des dritten Elements (30) passt.

2. Fügestruktur nach Anspruch 1, wobei
das erste Element (10) zumindest mit dem Abstandshalter (25) in einem Zustand verschweißt ist, in dem ein Bereich des ersten Elements (10), der dem Abstandshalter (25) entspricht, in Richtung des Abstandshalters (25) verzogen ist.

3. Fügeverfahren, wobei
ein erstes Element (10), das aus einem metallischen Material gebildet ist, ein zweites Element (20), das aus einem metallischen Material desselben Typs wie das des ersten Elements (10) gebildet ist, das mit dem ersten Element (10) verschweißt werden kann, und ein drittes Element (30), das aus einem Material gebildet ist, das schwer mit dem ersten Element (10) und dem zweiten Element (20) zu verschweißen ist, miteinander verbunden werden, und
ein Durchgangsabschnitt (31) in dem dritten Element (30) gebildet wird,
wobei das Fügeverfahren die folgenden Schritte umfasst:
Bereitstellen eines Abstandshalters (25), der derart gebildet ist, dass ein zentraler Abschnitt des Abstandshalters (25) mehr vorsteht als ein äußerer Umfangsabschnitt des Abstandshalters (25) und dass eine Höhe des zentralen Abschnitts des Abstandshalters (25) größer ist als eine Dicke des dritten Elements (30), durch Schmelzen eines Zusatzmaterials in dem Durchgangsabschnitt (31), um das Zusatzmaterial mit dem zweiten Element (20) zu verbinden, in einem Zustand, in dem das dritte Element (30) auf dem zweiten Element (20) angeordnet ist;
Anordnen des dritten Elements (30) zwischen dem ersten Element (10) und dem zweiten Element (20) durch Anordnen des ersten Elements (10) auf einer Oberfläche des dritten Elements (30) und Drücken des ersten Elements (10) gegen den Abstandshalter (25), bevor das Zusatzmaterial erstarrt ist, und
Verschweißen des ersten Elements (10) zumindest mit dem Abstandshalter (25) durch Bestrahlen eines Bereichs des ersten Elements (10), der dem Abstandshalter (25) entspricht, mit Laserlicht (L).

4. Fügeverfahren nach Anspruch 3, wobei
in dem Schritt des Verschweißens des ersten Elements (10) zumindest mit dem Abstandshalter (25), wenn die Temperatur des Abstandshalters (25) gleich oder niedriger als ein Schmelzpunkt und gleich oder höher als 100 °C ist, Laserlicht (L) abgestrahlt wird.

5. Fügeverfahren nach Anspruch 3 oder 4, ferner umfassend einen Schritt:
Vorbereiten einer Formvorrichtung (45), die mit einem Formloch (46) versehen ist, das die Formvorrichtung (45) in einer Dickenrichtung durchsetzt und einen Lochdurchmesser aufweist, der von einer Oberfläche zu einer anderen Oberfläche allmählich zunimmt, und die aus einem Material gebildet ist, dessen Schmelzpunkt höher ist als der des Zusatzmaterials,
wobei
in dem Schritt des Bereitstellens des Abstandshalters (25) in einem Zustand, in dem eine Oberfläche der Formvorrichtung (45), an der der Lochdurchmesser des Formlochs (46) größer ist, auf dem zweiten Element (20) angeordnet ist, das Zusatzmaterial in dem Formloch (46) geschmolzen wird, und danach die Formvorrichtung (45) entfernt wird.

## Revendications

1. Structure d'assemblage, comprenant :
un premier élément (10) formé d'un matériau métallique ;
un deuxième élément (20) formé d'un matériau métallique d'un même type que celui du premier élément (10) qui peut être soudé au premier élément (10) ; et
un troisième élément (30) formé d'un matériau qui est difficile à souder au premier élément (10) et au deuxième élément (20),
le premier élément (10), le deuxième élément (20) et le troisième élément (30) étant assemblés les uns aux autres,
dans laquelle
le deuxième élément (20) est pourvu d'une entretoise (25) formée d'un matériau d'apport qui est joint à une surface du deuxième élément (20) qui fait face au premier élément (10),
une portion traversante (31) dans laquelle l'entretoise (25) est insérée est formée dans le troisième élément (30),
et
le premier élément (10) est soudé au moins à l'entretoise (25) par une portion soudée (40), dans un état où l'entretoise (25) est insérée dans la portion traversante (31) et le troisième élément (30) est interposé entre le premier élément (10) et le deuxième élément (20),
**caractérisée en ce que** l'entretoise (25) est formée de telle sorte qu'une portion centrale de l'entretoise (25) fait saillie vers le premier élément (10) davantage qu'une portion périphérique extérieure de l'entretoise (25) et de telle sorte que la hauteur de la portion centrale de l'entretoise (25) est supérieure à l'épaisseur de plaque du troisième élément (30), et le premier élément (10) est placé sur une surface du troisième élément (30) et pressé contre l'entretoise (25) avant que le matériau d'apport fondu ne soit solidifié de telle sorte que la portion centrale de l'entretoise (25) est déformée de sorte que l'entretoise (25) s'insère dans le trou traversant (31) du troisième élément (30).

2. Structure d'assemblage selon la revendication 1, dans laquelle
le premier élément (10) est soudé au moins à l'entretoise (25) dans un état dans lequel une région du premier élément (10) qui correspond à l'entretoise (25) est gauchie vers l'entretoise (25).

3. Procédé d'assemblage, dans lequel
un premier élément (10) formé d'un matériau métallique, un deuxième élément (20) formé d'un matériau métallique d'un même type que celui du premier élément (10) qui peut être soudé au premier élément (10), et un troisième élément (30) formé d'un matériau qui est difficile à souder au premier élément (10) et au deuxième élément (20) sont assemblés les uns aux autres, et une portion traversante (31) est formée dans le troisième élément (30),
le procédé d'assemblage comprenant les étapes consistant à :
fournir une entretoise (25) formée de telle sorte qu'une portion centrale de l'entretoise (25) fait saillie davantage qu'une portion périphérique extérieure de l'entretoise (25) et de telle sorte qu'une hauteur de la portion centrale de l'entretoise (25) est supérieure à une épaisseur du troisième élément (30), en faisant fondre un matériau d'apport dans la portion traversante (31) pour joindre le matériau d'apport au deuxième élément (20) dans un état où le troisième élément (30) est placé sur le deuxième élément (20) ;
interposer le troisième élément (30) entre le premier élément (10) et le deuxième élément (20) en plaçant le premier élément (10) sur une surface du troisième élément (30) et en pressant le premier élément (10) contre l'entretoise (25) avant que le matériau d'apport ne soit solidifié, et souder le premier élément (10) au moins à l'entretoise (25) en irradiant une lumière laser (L) vers une région du premier élément (10) qui correspond à l'entretoise (25).

4. Procédé d'assemblage selon la revendication 3, dans lequel
dans l'étape consistant à souder le premier élément (10) au moins à l'entretoise (25), lorsque la température de l'entretoise (25) est inférieure ou égale à un point de fusion et supérieure ou égale à 100 °C, une lumière laser (L) est irradiée.

5. Procédé d'assemblage selon la revendication 3 ou 4, comprenant en outre une étape consistant à :
préparer un gabarit de moulage (45) pourvu d'un trou de moulage (46) traversant le gabarit de moulage (45) dans une direction de l'épaisseur et ayant un diamètre de trou qui augmente progressivement d'une surface à une autre surface et formé d'un matériau dont le point de fusion est supérieur à celui du matériau d'apport,
dans lequel
dans l'étape consistant à fournir l'entretoise (25), dans un état dans lequel une surface du gabarit de moulage (45) au niveau de laquelle le diamètre de trou du trou de moulage (46) est plus grand est placée sur le deuxième élément (20), le matériau d'apport est fondu dans le trou de moulage (46), et ensuite, le gabarit de moulage (45) est retiré.
